# EUROPEAN PATENT SPECIFICATION

(11) **EP 0 853 372 B1**
(45) Date of publication and mention of the grant of the patent: **26.03.2003**
(21) Application number: 97122781.4
(22) Date of filing: 23.12.1997
(51) Int. Cl.: H02M 3/338

(54) **Power supply circuit**
Stromversorgungsschaltung
Circuit d'alimentation de puissance

(30) Priority: 24.12.1996 JP 34282796
(43) Date of publication of application: 15.07.1998
(73) Proprietor: MATSUSHITA ELECTRIC WORKS, LTD., Kadoma-shi Osaka 571 (JP)
(72) Inventor: Tamura, Hideki, Moriyama-shi, Shiga (JP); Abe, Hideaki, Neyagawa-shi, Osaka (JP)
(74) Representative: Pellmann, Hans-Bernd, Dipl.-Ing.

(56) References cited:
- EP-A- 0 690 555
- DE-A- 4 316 945
- PATENT ABSTRACTS OF JAPAN vol. 14, no. 560 (E-1012), 13 December 1990 & JP 02 241362 A (FUJI ELECTROCHEM), 26 September 1990,
- PATENT ABSTRACTS OF JAPAN vol. 10, no. 50 (E-384), 27 February 1986 & JP 60 204261 A (SANKEN DENKI), 15 October 1985,
- PATENT ABSTRACTS OF JAPAN vol. 10, no. 8 (E-373), 14 January 1986 & JP 60 170465 A (MATSUSHITA), 3 September 1985,
- PATENT ABSTRACTS OF JAPAN vol. 96, no. 1, 31 January 1996 & JP 07 245949 A (SHINDENGEN ELECTRIC), 19 September 1995,
- PATENT ABSTRACTS OF JAPAN vol. 95, no. 4, 31 May 1995 & JP 07 007942 A (MURATA MFG), 10 January 1995,

## Description

The present invention relates to a power supply circuit.

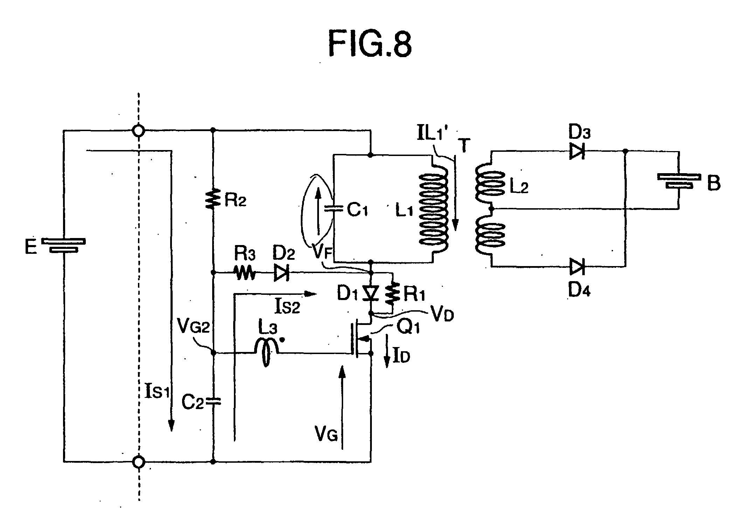

As a prior art power supply circuit of the type associated with the subject matter of the present invention, there is a charging circuit for charging a battery as described in United States Patent 5,333,104. Fig. 8 illustrates this prior art circuit which comprises a series circuit of an LC resonance circuit formed of a parallel circuit of a resonance capacitor C₁ and a primary winding L₁, a parallel circuit of a diode D₁ and a resistor R₁, and an FET Q₁, which is a voltage driven switching element, connected to a direct current power supply E; a series circuit of a resistor R₂ and a capacitor C₂ connected to the direct current power supply E; a feedback winding L₃ magnetically coupled with the primary winding L₁ and arranged between a connection point of the resistor R₂ and the capacitor C₂ and the gate of the FET Q₁ to constitute a oscillating transformer T; and a series circuit of a resistor R₃ and a diode D₂ through which a connection point of the resistor R₂ and the capacitor C₂ is connected to a connection point of the primary winding L₁ and a diode D₁, thus constituting an invertor. The resistor R₂ and R₃, the capacitor C₂, and the diode D₂ constitute a starting circuit for stabilizing oscillation, a bias circuit, and a bias control circuit.

A secondary winding L₂, which has a median tap magnetically coupled to an oscillating transformer T for generating a secondary output, has both ends connected to a plus pole of a secondary battery B, subjected to charging, through diodes D₃, D₄, and the median tap connected to a minus pole of the secondary battery B subjected to charging, such that the secondary battery B subjected to charging is charged with a secondary output.

Next, the operation of this exemplary circuit of the prior art will be described.

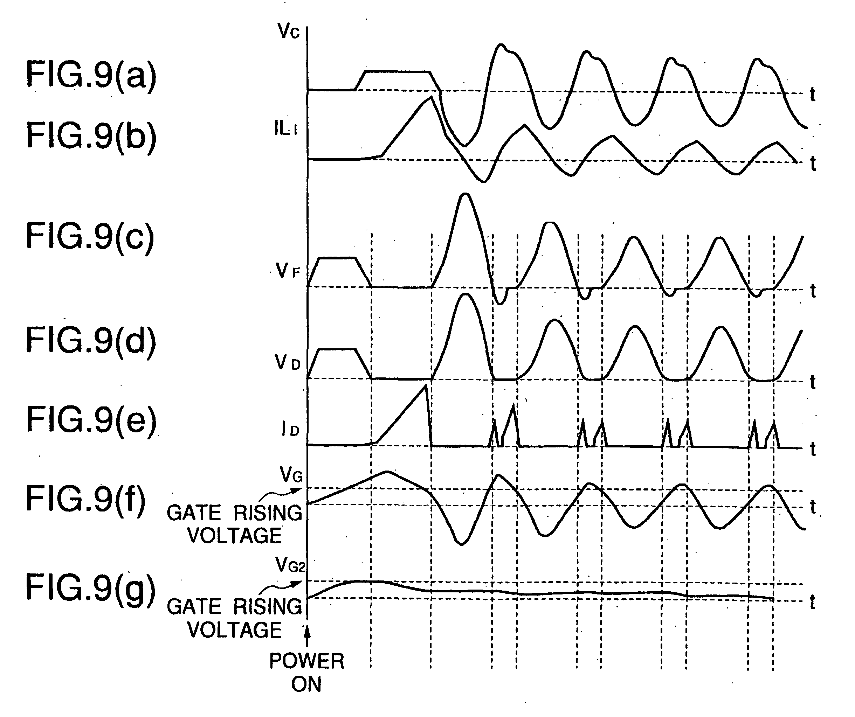

When the direct current power supply E is now turned on, the capacitor C₂ is charged by a current Is₁ passing through the resistor R₂. By this charging, the voltage of the capacitor C₂ is increased, and when this voltage reaches a threshold voltage of the FET Q₁, the FET Q₁ becomes active and turns on. The FET Q₁ in on-state causes a current IL₁ illustrated in Fig. 9(b) to flow through the primary winding L₁, leading to a voltage induced across the feedback winding L₃ to perform a feedback operation, thus starting oscillations. Here, during a period in which a drain voltage V_{D} of the FET Q₁ is lower than the voltage across the capacitor C₂, charges on the capacitor C₂ is discharged by a circuit including the capacitor C₂, the resistor R₃, a diode D₂, the diode D₁, and the resistor R₁, the FET Q₁, and the capacitor C₂, causing a discharge current Is₂ to flow, as illustrated in Fig. 8. This discharge current Is₂ reduces the voltage on the capacitor C₂ lower than the threshold voltage at the gate of the FET Q₁, whereby an on-period becomes shorter. As the on-period is shorter, the current Is₂ for discharging the charges on the capacitor C₂ is reduced so that the voltage across the capacitor C₂ is increased to apply a negative feedback in a direction in which a vias voltage V_{G2} is stabilized, as illustrated in Fig. 9(g), thereby achieving a stable self-excited oscillating operation. Fig. 9(a) illustrates a voltage V_{C} across both ends of the resonance capacitor C₁, and Fig. 9(b) illustrates a current IL₁ flowing through the primary winding L₁. Fig. 9(c) illustrates a voltage V_{F} at a connection point of a resonance circuit formed of a parallel circuit of a capacitor C₁ and the primary winding L₁ and the diode D₁.

The diode D₁ between the FET Q₁ and the LC resonance circuit serves to block an inverse current from passing through a parasitic diode of the FET Q₁.

In the exemplary circuit of the prior art illustrated in Fig. 8, a sinusoidal voltage V_{G} induced by the feedback winding L₃ is applied to the gate of the FET Q₁, as illustrated in Fig. 9(f), and a peak value of the sinusoidal wave is near the threshold voltage of the FET Q₁. A current I_{D} flowing through the FET Q₁, illustrated in Fig. 9(e), begins to flow before the drain voltage V_{D} of the FET Q₁, illustrated in Fig. 9(d) reaches zero volt, and the current I_{D} does not yet decrease to zero even after a drain voltage V_{D} of the FET Q₁ begins to increase. This causes a problem that a switching loss occurs in the FET Q₁.

Document JP-A-2 241 362 discloses a driving circuit for a self-excited single converter in which a base resistor R₁ is used in connection with an inductor L to change the shape of the base current from a rectangular shape to a triangular shape so as to reduce the loss of the base resistor due to a reduced effective base current.

Further, this document discloses a current-driven switching element, i.e. a bipolar transistor, wherein the driving current is reduced in order to reduce the loss of the base resistor R₁. However, such a base resistor necessarily is provided as a current limiting element for the current-driven switching element. Moreover, according to the teaching of this document an inductor L is suggested to be introduced in order to change the wave form of the base current flowing through the base resistor, to thereby reduce the loss of the base resistor.

Furthermore, document JP-A-60 204 261 shows a self-excited oscillator circuit with which the power loss is reduced and a switching transistor is prevented from damaging by increasing the bias amount of the base current of the transistor when the collector current of the transistor increases.

The present invention has been made in view of the problem mentioned above, and its object is to provide a power supply circuit comprising a highly efficient and reliable invertor circuit which is capable of suppressing the switching loss of a voltage driven switching element.

According to the present invention, this object is solved by a power supply circuit as defined in the appended claim 1.

Advantageous modifications are as set out in the appended dependent claims.

Thus, the present invention provides a power supply circuit which comprises an LC resonance circuit, a feedback winding, a voltage driven switching element, a bias circuit for applying a bias voltage to a control terminal of the switching element, and a bias control circuit for controlling the bias voltage, thus constituting an invertor adapted to operate in a self-excited oscillation, wherein a first resistor is connected between the feedback winding and the control terminal of the switching element for delaying the phase of an alternate current voltage generated in the feedback winding, thus making it possible to effectively realize a highly efficient and reliable power supply circuit which eliminates a switching loss of the switching element and suppresses undesired losses.

The aforementioned invention additionally includes a series circuit of a second resistor and a first diode connected between a connection point of the LC resonance circuit and the switching element and the bias circuit as the bias control circuit, so that more stable oscillations can be provided by the bias control circuit while suppressing undesired losses.

Furhter the invention may includes a circuit for controlling the bias voltage with a current flowing through the switching element as the bias control circuit, so that more stable oscillations can be provided by the bias control circuit while suppressing undesired losses.

The above invention additionally includes a second diode connected in parallel with the first resistor, thus making it possible to suppress a delayed voltage at the control terminal of the switching element, when it is turned off, by a forward voltage of the second diode to prevent losses of the switching element from increasing.

The above invention additionally includes a transistor which turns on to control the bias voltage when a current flowing through the switching element reaches a predetermined value, and a delay capacitor connected to the base of the transistor for delaying an off-operation of the transistor, so that an off-operation of the transistor can be delayed to thereby rapidly decrease a current flowing through the switching element, making it possible to suppress the losses of the switching element.

In the accompanying drawings:
Fig. 1 is a circuit diagram of a first embodiment of the present invention;
Figs. 2(a) to 2(d) are waveform charts for explaining the operation of the first embodiment;
Figs. 3(a) to 3(d) are waveform charts for explaining the operations of the first and third embodiments;
Fig. 4 is a circuit diagram of a second embodiment of the present invention;
Fig. 5 is a circuit diagram of a third embodiment of the present invention;
Fig. 6 is a circuit diagram of a fourth embodiment of the present invention;
Figs. 7(a) and 7(b) are waveform charts for explaining the operation of the fourth embodiment;
Fig. 8 is a circuit diagram of a prior art example; and
Figs. 9 (a) to 9(g) are timing charts for explaining the operation of the prior art example.

The present invention will hereinafter be described in connection with several embodiments.

### 1st Embodiment

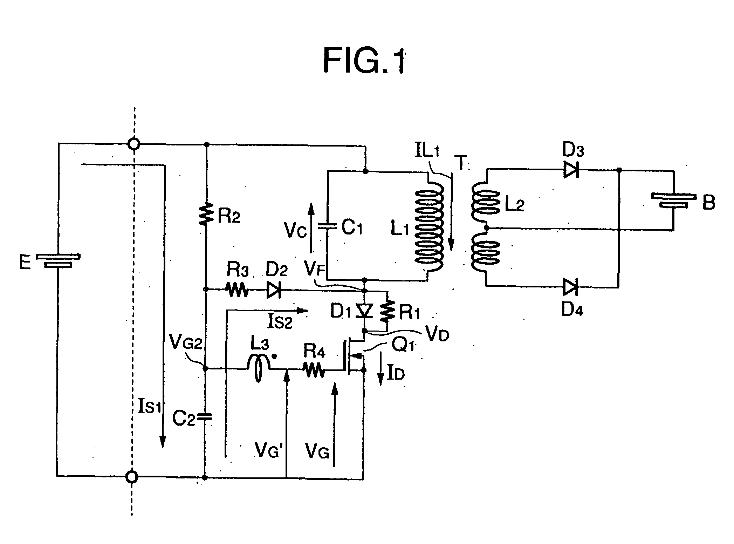

Fig. 1 illustrates a circuit diagram of a first embodiment. This embodiment is characterized by a resistor R₄ inserted between the gate of an FET Q₁, which is a voltage driven switching element, and a feedback winding L₃ for suppressing a switching loss, and therefore differs from the exemplary circuit of the prior art of Fig. 8 in this respect. In Fig. 1, circuit elements, circuit voltages, and circuit currents identical to those in the exemplary circuit of the prior art are designated by the same reference letters and numerals.

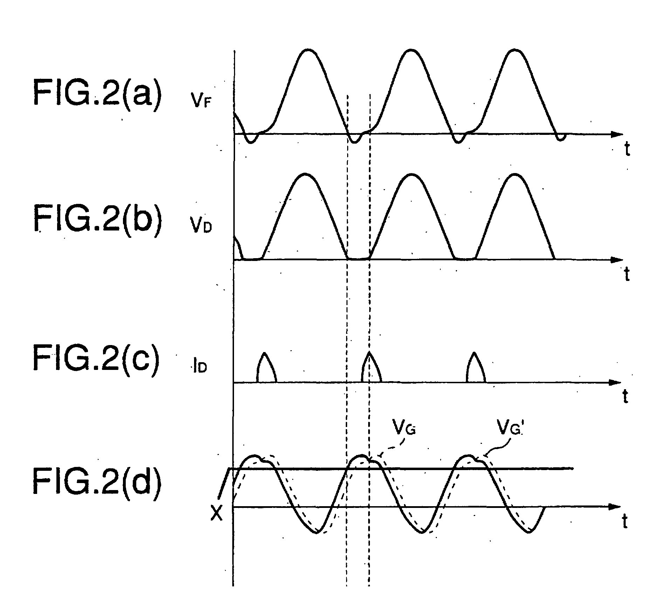

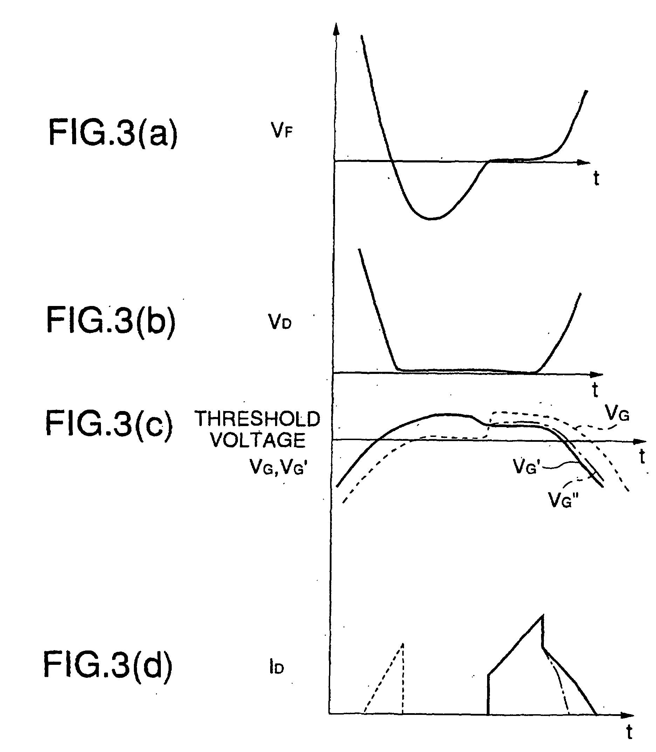

Next, the operation of this embodiment will be described with reference to Figs. 2(a) to 2(d) and 3(a) to 3(d). Figs. 3(a) to 3(d) are enlarged views of main portions in Figs. 2(a) to 2(d). Since the circuit of this embodiment operates basically in the same manner as the exemplary circuit of the prior art, a characteristic operation will only be described below.

First, in this embodiment, by inserting the resistor R₄ between the gate of the FET Q₁ and the feedback winding L₃, a delay occurs in a voltage V_{G} (illustrated by broken lines in Figs. 2(d) and 3(c)) applied to the gate in comparison with a voltage V_{G}' (illustrated by solid lines in Figs. 2(d) and 3(c)) of the feedback winding L₃ due to the influence of an input capacitance existing at the gate of the FET Q₁. Thus, a current I_{D} before a drain voltage V_{D} of the FET Q₁ illustrated in Fig. 2(b) or Fig. 3(b) reaches zero, stops flowing as illustrated in Fig. 2(c) (or as illustrated by a broken line in Fig. 3(d)), thereby making it possible to reduce the switching loss. A flat portion in the gate voltage V_{G}, as illustrated in Fig. 3(c), is produced by the influence of a mirror effect. Fig. 2 (a) and Fig. 3 (a) illustrate a voltage V_{F} at a connection point of an LC resonance circuit formed of the capacitor C₁ and the primary winding L₁ and a parallel circuit of the diode D₁ and the resistor D₁. X in Fig. 2(d) indicates a threshold value for the gate of the FETQ₁.

### 2nd Embodiment

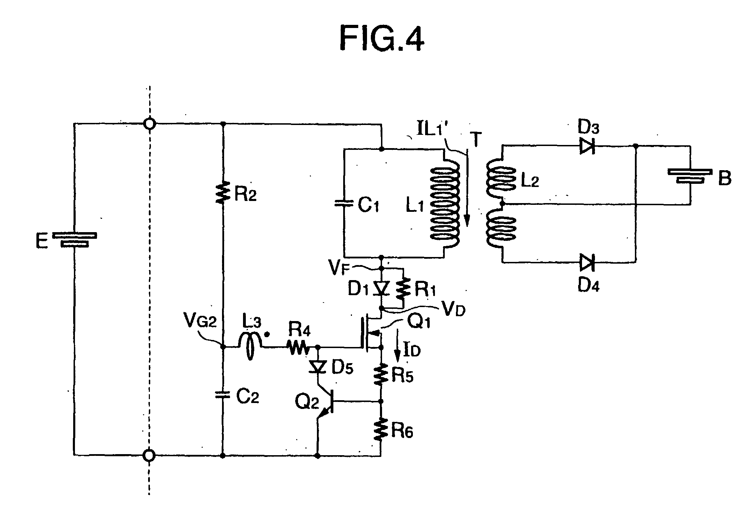

As shown in Fig. 4, this embodiment replaces the bias control circuit of the first embodiment formed of the resistor R₃ and the diode D₂ with a bias control circuit which is formed by connecting a series circuit of resistors R₅, R₆ to the source of an FET Q₁, connecting a series circuit of a diode D₅ and a transistor Q₂ in parallel with a circuit including a gate-to-source path of FET Q₁ and the resistors R₅, R₆, and connecting a connection point of the two resistors R₅, R₆ to the base of the transistor Q₂. Since the remaining configuration is the same as the first embodiment, the same circuit elements, circuit currents, and circuit voltages are designated by the same reference letters and numerals.

Next, the operation of this embodiment will be described. Since the circuit of this embodiment operates basically in the same manner as the circuit of the first embodiment except for a circuit for controlling a bias, a characteristic operation only will be described below.

In the circuit of this embodiment, when a voltage generated at the connection point of the resistors R₅, R₆ is increased to a predetermined value by a current I_{D} flowing through the FET Q₁, the transistor Q₂ begins to operate to discharge charges on a bias capacitor C₂ through a circuit including the capacitor C₂, feedback winding L₃, resistor R₄, diode D₅, transistor Q₂, and capacitor C₂ to control a bias voltage V_{G2} of the FET Q₁. Here, circuit constants of the resistors R₅, R₆, and so on are set at values so as to balance the charging and discharging for the bias capacitor C₂.

The resistor R₄ serves to reduce a switching loss of the FET Q₁ as is the case of the first embodiment.

### 3rd Embodiment

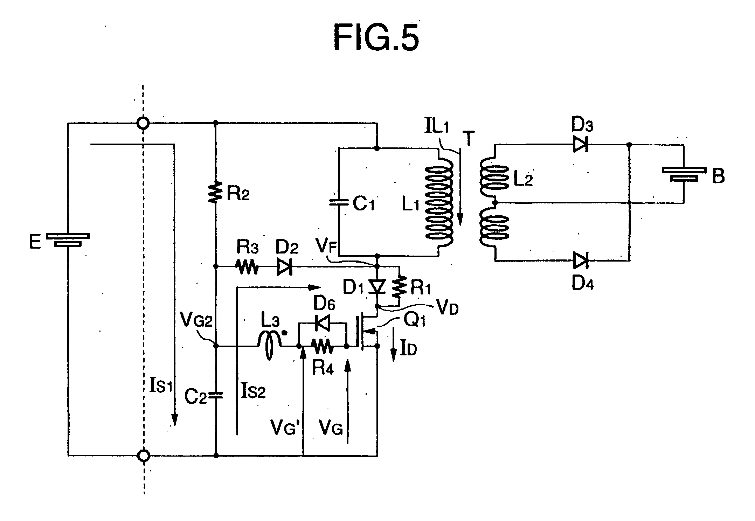

This embodiment differs from the circuit of the first embodiment in that a diode D₆ is connected in parallel with a resistor R₄ for reducing a switching loss, as illustrated in Fig. 5. Since the remaining configuration is the same as the first embodiment, the same circuit elements, circuit currents, and circuit voltages are designated by the same reference letters and numerals.

While the circuit of the first embodiment eliminates the switching loss of the FET Q₁ when it turns on by adding the resistor R₄, the switching loss is increased to the contrary, when the FET Q₁ turns off, because the gate voltage V_{G} falls with a delay. To solve this problem, this embodiment has the diode D₆ connected in parallel with the resistor R₄ to suppress the delay of the gate voltage V_{G} by a forward voltage of the diode D₆ when the FET Q₁ turns off, thereby making it possible to prevent the switching loss from increasing. The gate voltage V_{G} of this embodiment is illustrated by V_{G}" in Fig. 3(c), and a current I_{D} is illustrated by a one-dot chain line in Fig. 3(d).

### 4th Embodiment

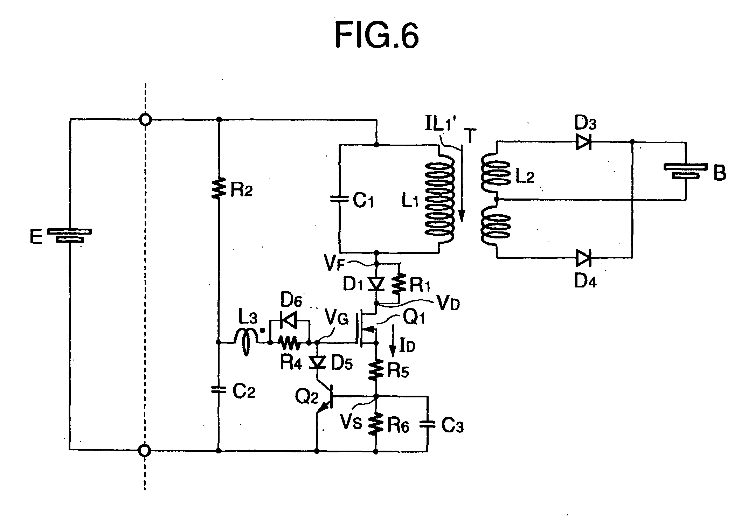

This embodiment differs from the circuit of the second embodiment in that a capacitor C₃ is connected in parallel with a resistor R₆, and a diode D₆ is connected in parallel with a resistor R₄ like the third embodiment, as illustrated in Fig. 6.

Specifically, with the resistors R₅, R₆ connected to the source of the FET Q₁, a current flowing through the FET Q₁ reaches a predetermined value, and the transistor Q₂ for performing a bias control begins to operate. Thus, when the FET Q₁ turns off, the current is also reduced to cause a base voltage Vs of the transistor Q₂ to decrease, so that the threshold voltage of the FET Q₁, viewed from the ground, also becomes reduced. In other words, since the threshold voltage lowers to prevent the FET Q₁ from turning off even if the gate voltage V_{G} becomes reduced, the current I_{D} gradually lowers as illustrated in Figs. 2, 3. This gradually lowering current I_{D} causes the switching loss.

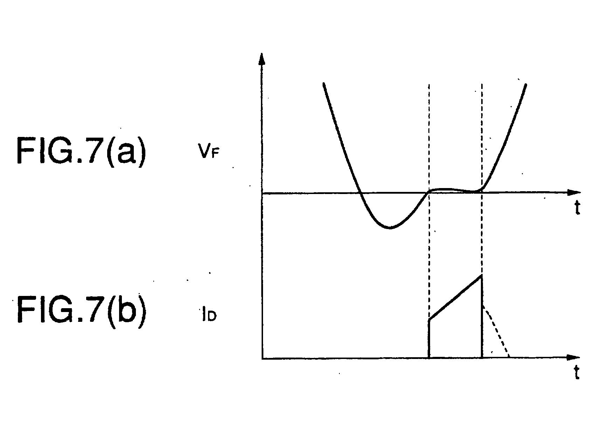

In this embodiment, by adding the capacitor C₃ in parallel with the resistor R₆, the base voltage Vs of the transistor Q₂ delays in time until charges on the capacitor C₃ are discharged. As a result, an apparent threshold voltage, viewed from the ground, does not lower, and the current I_{D} vertically drops as illustrated by a solid line in Fig. 7(b), so that the switching loss can be prevented from occurring. Fig. 7(a) illustrates a voltage V_{F}.

While the respective foregoing embodiments employ the direct current power supply E, any voltage from a commercially available power supply may be rectified to produce a flat voltage usable in the present invention. In addition, similar effects can be produced when a voltage driven switching element such as IGBT is employed in place of FET.

According to the present invention, a resistor is inserted between the gate of an FET and a feedback winding to produce a delay in a voltage applied to the gate of the FET in comparison with a voltage of the feedback winding due to the influence of an input capacitance existing at the gate of the FET. Thus, a current does not flow before a drain voltage of the FET reaches zero volt, thereby making it possible to reduce the switching loss.

## Claims

1. A power supply circuit comprising:
a power supply **(E);**
a power transformer **(T)** connected on its secondary side **(L2)** to a circuit **(D3, D4, B)** which is to be fed by the power supply circuit;
a voltage driven switching element **(Q1)** having a control terminal;
an LC resonance circuit **(L1, C1)** connected in series to said switching element **(Q1),** wherein the inductive part of said LC resonance circuit is the first winding of said power transformer **(T);**
a feedback winding **(L3)** for applying a feedback voltage according to a high frequency current of said LC resonance circuit **(L1, C1)** to said control terminal of said switching element **(Q1);**
a bias circuit **(R2, C2)** connected in parallel to said series connection of said LC resonance circuit **(L1, C1)** and said switching element **(Q1),** and further connected to said feedback winding **(L3)** so as to apply a bias voltage to said control terminal via said feedback winding **(L3);** and
a bias control circuit **(R3, D2; R5, R6, Q2, D5)** for controlling the bias voltage, and connected between said bias circuit **(R2, C2)** and said series connection of said LC resonance circuit (**L1, C1**) and said switching element (**Q1**),
**characterized by**
a resistor **(R4)** connected to said control terminal of said switching element (**Q1**), wherein the bias voltage and the feedback voltage are applied to said control terminal of said switching element (**Q1**) via said resistor (**R4**);
wherein said resistor **(R4)** is selected so as to delay the feedback voltage by a predetermined time.

2. A power supply circuit according to claim 1,
**characterized by**
a diode **(D6)** connected in parallel with said resistor (**R4**).

3. A power supply circuit according to claim 1,
**characterized in that**
said bias control circuit comprises a transistor **(Q2)** which turns on to control the bias voltage when a current flowing through said switching element (**Q1**) reaches a predetermined value; and
a delay capacitor **(C3)** connected to a base of said transistor (**Q2**) for delaying an off-operation of said transistor (**Q2**).

## Revendications

1. Circuit d'alimentation de puissance comprenant :
une source d'énergie (E) ;
un transformateur de puissance (T) connecté, du côté secondaire (L2), à un circuit (D3, D4, B) qui doit être alimenté par le circuit d'alimentation de puissance ;
un élément de commutation (Q1) commandé en tension, ayant une borne de commande ;
un circuit LC de résonance (L1, C1) monté en série avec ledit élément de commutation (Q1), dans lequel la partie inductive dudit circuit LC de résonance est le premier enroulement dudit transformateur de puissance (T) ;
un enroulement de réaction (L3) destiné à appliquer une tension de réaction, selon un courant haute fréquence dudit circuit LC de résonance (L1, C1), à ladite borne de commande dudit élément de commutation (Q1) ;
un circuit de polarisation (R2, C2) connecté en parallèle sur ledit montage en série dudit circuit LC de résonance (L1, C1) et dudit élément de commutation (Q1), et connecté en outre audit enroulement de réaction (L3) de manière à appliquer une tension de polarisation à ladite borne de commande par le biais de l'enroulement de réaction (L3) ; et
un circuit de commande de polarisation (R3, D2 ; R5, R6, Q2, D5) destiné à commander la tension de polarisation et connecté entre ledit circuit de polarisation (R2, C2) et ledit montage en série dudit circuit LC de résonance (L1, C1) et dudit élément de commutation (Q1),
**caractérisé par**
une résistance (R4) connectée à ladite borne de commande dudit élément de commutation (Q1), la tension de polarisation et la tension de réaction étant appliquées à ladite borne de commande dudit élément de commutation (Q1) par le biais de la résistance (R4) ;
ladite résistance (R4) est sélectionnée de manière à retarder la tension de réaction d'un temps prédéterminé.

2. Circuit d'alimentation de puissance selon la revendication 1, **caractérisé par**
une diode (D6) connectée en parallèle à ladite résistance (R4).

3. Circuit d'alimentation de puissance selon la revendication 1, **caractérisé en ce que**
ledit circuit de commande de polarisation comprend un transistor (Q2) qui devient passant pour commander la tension de polarisation lorsqu'un courant traversant ledit élément de commutation (Q1) atteint une valeur prédéterminée, et
une capacité de retard (C3) connectée à une base dudit transistor (Q2) afin de retarder un bloquage dudit transistor (Q2).

## Patentansprüche

1. Stromversorgungsschaltung, mit:
einer Stromquelle (E),
einem Leistungstransformator (T), dessen Sekundärseite (L2) mit einer von der Stromversorgungsschaltung zu versorgenden Schaltungsanordnung (D3, D4, B) verbunden ist,
einem spannungsgesteuerten Schaltelement (Q1) mit einem Steueranschluss,
einem mit dem Schaltelement (Q1) in Reihe geschalteten LC-Schwingkreis (L1, C1), dessen Induktivität die erste Wicklung des Leistungstransformators (T) bildet,
einer Rückkopplungswicklung (L3) zur Zuführung einer einem hochfrequenten Strom des LC-Schwingkreises (L1, C1) entsprechenden Rückkopplungsspannung zum Steueranschluss des Schaltelementes (Q1),
einer der Reihenschaltung des LC-Schwingkreises (L1, C1) und des Schaltelementes (Q1) parallel geschalteten Vorspannungsschaltung (R2, C2), die mit der Rückkopplungswicklung (L3) verbunden ist, um dem Steueranschluss über die Rückkopplungswicklung (L3) eine Vorspannung zuzuführen, und
einer Vorspannungssteuerschaltung (R3, D2; R5, R6, Q2, D5) zur Steuerung der Vorspannung, die zwischen die Vorspannungsschaltung (R2, C2) und die Reihenschaltung des LC-Schwingkreises (L1, C1) mit dem Schaltelement (Q1) geschaltet ist,
**gekennzeichnet durch**
einen mit dem Steueranschluss des Schaltelements (Q1) verbundenen Widerstand (R4), wobei die Vorspannung und die Rückkopplungsspannung dem Steueranschluss des Schaltelements (Q1) über den Widerstand (R4) zugeführt werden, und
wobei der Widerstand (R4) zur Verzögerung der Rückkopplungsspannung um eine vorgegebene Zeitdauer ausgewählt ist.

2. Stromversorgungsschaltung nach Anspruch 1,
**gekennzeichnet durch**
eine Diode (D6), die dem Widerstand (R4) parallel geschaltet ist.

3. Stromversorgungsschaltung nach Anspruch 1,
**dadurch gekennzeichnet, dass**
die Vorspannungssteuerschaltung einen Transistor (Q2) aufweist, der zur Steuerung der Vorspannung leitend wird, wenn ein über das Schaltelement (Q1) fließender Strom einen vorgegebenen Wert erreicht, und
ein Verzögerungskondensator (C3) mit der Basis des Transistors (Q2) zur Verzögerung des Sperrvorgangs des Transistors (Q2) verbunden ist.
